(19) **Europäisches Patentamt / European Patent Office / Office européen des brevets**

(11) **EP 1 974 451 B1**

(12) **FASCICULE DE BREVET EUROPEEN**

(45) Date de publication et mention
de la délivrance du brevet:
**04.10.2017 Bulletin 2017/40**

(21) Numéro de dépôt: **07703907.1**

(22) Date de dépôt: **16.01.2007**

(51) Int Cl.:
***H02M 7/08*** (2006.01)

(86) Numéro de dépôt international:
**PCT/EP2007/050392**

(87) Numéro de publication internationale:
**WO 2007/080195 (19.07.2007 Gazette 2007/29)**

(54) **DISPOSITIF DE REDRESSEMENT D'UNE TENSION ALTERNATIVE TRIPHASÉE**

VORRICHTUNG ZUR GLEICHRICHTUNG EINER DREIPHASENWECHSELSPANNUNG

DEVICE FOR RECTIFYING A THREE-PHASE ALTERNATING VOLTAGE

(84) Etats contractants désignés:
**DE ES FR GB IT**

(30) Priorité: **16.01.2006 FR 0600376**

(43) Date de publication de la demande:
**01.10.2008 Bulletin 2008/40**

(73) Titulaire: **Thales**
**92400 Courbevoie (FR)**

(72) Inventeur: **BLANCHERY, Francis**
**F-78400 Chatou (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A- 5 124 904     US-A1- 2005 135 126**

- **RENDUSARA D ET AL: "Design considerations for 12/24-pulse auto-connected rectifiers for large VA, PWM drive systems" APPLIED POWER ELECTRONICS CONFERENCE AND EXPOSITION, 1999. APEC '99. FOURTEENTH ANNUAL DALLAS, TX, USA 14-18 MARCH 1999, PISCATAWAY, NJ, USA,IEEE, US, vol. 2, 14 mars 1999 (1999-03-14), pages 903-909, XP010323619 ISBN: 0-7803-5160-6**

## Description

L'invention concerne la conversion d'énergie électrique alternative (AC) en énergie continue (DC). Un dispositif de redressement d'une tension alternative triphasée comporte un autotransformateur alimenté en tension triphasé. Des autotransformateurs peuvent être utilisés pour réduire le poids et l'encombrement s'il n'y a pas de contrainte d'isolation entre les potentiels du côté du réseau d'alimentation et les potentiels du côté de l'utilisation.

La conversion alternatif/continu à partir d'une tension de réseau d'alimentation en triphasé utilise des ponts redresseurs ; dans la théorie il suffirait d'un seul pont de deux fois trois diodes pour faire le redressement de tension triphasé en tension continue ; mais dans la pratique l'utilisation d'un seul pont alimenté par le réseau triphasé produit un courant continu affecté d'une oscillation résiduelle trop importante, qui n'est pas acceptable pour beaucoup d'applications. De plus, le redressement provoque une réinjection de courants dans le réseau, ces courants ayant des fréquences harmoniques de la fréquence du courant alternatif d'alimentation. Ces réinjections d'harmoniques ne sont pas acceptables si elles sont trop importantes.

Pour réduire les ondulations résiduelles de tension continue et les harmoniques de courant réinjectés sur le réseau, on a déjà proposé d'augmenter le nombre de phases du courant d'alimentation et le nombre de ponts redresseurs. Ainsi, typiquement, on peut transformer le système triphasé, dont les trois phases sont espacées de 120 °, en trois systèmes triphasés comportant chacun trois phases espacées de 120°. Les trois systèmes sont chacun décalés de 40° l'un par rapport à l'autre. Trois ponts de six diodes sont utilisés, chaque pont étant alimenté par l'un de ces réseaux. Ces convertisseurs AC/DC à dix-huit diodes sont appelés aussi convertisseurs à 18 impulsions. Les ondulations résiduelles deviennent faibles, les réinjections d'harmoniques aussi. Les neuf phases sont produites à partir d'un autotransformateur. Une telle réalisation est par exemple décrite dans le brevet US 5,124,904. Cet autotransformateur comporte un noyau magnétique à trois branches et sur chaque branche magnétique un bobinage principal. Les trois bobinages principaux sont connectés en triangle et on a constaté qu'une part importante de la puissance de l'alimentation transite par le circuit magnétique de l'autotransformateur.

Afin de réduire la puissance transitant par le circuit magnétique de l'autotransformateur on peut mettre en oeuvre un autotransformateur dont les bobinages primaires sont raccordés en étoile et délivrant en sortie toujours trois systèmes triphasés. Le premier système de sortie est en phase avec les systèmes d'entrée et les deux autres systèmes de sortie sont symétriquement déphasées de 20° par rapport au premier système. La réduction de puissance transitant dans le circuit magnétique est essentiellement due au fait que le premier système de sortie est en phase avec le premier système d'entrée. Le premier système de sortie peut donc utiliser directement les enroulements primaires de l'autotransformateur. En conséquence le puissance délivrée par le premier système ne transite pas par le circuit magnétique. La réduction de puissance transitant dans le circuit magnétique est également due au faible déphasage (20°) des deux autres systèmes de sortie. La réduction de puissance transitant dans le circuit magnétique permet de réduire la masse du circuit magnétique.

Cette réalisation présente néanmoins l'inconvénient d'augmenter les ondulations résiduelles de la tension continue (mode différentiel et mode commun) délivrée en sortie d'un pont redresseur connecté aux systèmes de sortie de l'autotransformateur.

Pour pallier ce problème, on a connecté en aval du pont redresseur des selfs de lissage. Plus précisément, le dispositif de redressement comporte un pont de redressement propre à chaque système et une self pour chaque sortie de chaque pont. Pour trois systèmes de sortie, on a donc six self. Les selfs sont montées sur deux circuits magnétiques l'un recevant les trois selfs raccordées aux sorties positives des ponts de redressement et l'autre recevant les trois selfs raccordées aux sorties négatives des ponts de redressement. On a néanmoins constaté que la masse globale d'une telle réalisation était supérieure à celle utilisant un autotransformateur avec trois systèmes de sortie régulièrement réparties à 40°. En effet, le dispositif utilisant un autotransformateur à 40° ne nécessite pas de self de lissage.

L'invention vise à pallier les problèmes cités plus haut en proposant une amélioration des moyens de lissage afin de réduire la masse d'un dispositif mettant en oeuvre un autotransformateur délivrant trois systèmes déphasés de 20° seulement. L'invention présente un intérêt particulier lorsque la puissance délivrée par les différents systèmes de sortie n'est pas équilibrée, ce qui est le cas avec un autotransformateur à 20° mais il est bien entendu que l'invention n'est pas limitée à un dispositif mettant en oeuvre cet autotransformateur particulier. L'invention peut être mise en oeuvre pour lisser la tension de sortie de tout autotransformateur délivrant plusieurs systèmes triphasés.

A cet effet, l'invention a pour objet un dispositif de redressement d'une tension alternative triphasée comportant un autotransformateur alimenté en tension triphasé et délivrant plusieurs systèmes triphasés, chaque système comprenant trois phases déphasées de 120° l'une de l'autre, des moyens de redressement des systèmes triphasés, caractérisé en ce que les moyens de redressement comportent, propres à chaque système, un pont de redressement et des moyens de lissage et en ce que les moyens de lissage associés à chaque système sont indépendants les uns des autres.

L'invention sera mieux comprise et d'autres avantages apparaîtront à la lecture de la description détaillée d'un mode de réalisation donné à titre d'exemple, description illustrée par le dessin joint dans lequel :

La figure 1 représente un schéma d'un dispositif de redressement conforme à l'invention ;
la figure 2 représente une vue de principe simplifiée de moyens de lissage ;
la figure 3 représente une vue de principe simplifiée d'un transformateur à trois branches magnétiques destiné à une utilisation en triphasé ;
la figure 4 représente une composition vectorielle permettant de définir les caractéristiques d'un autotransformateur élévateur de tension, utilisable pour mettre en oeuvre l'invention.

Par souci de clarté, les mêmes éléments porteront les mêmes repères dans les différentes figures.

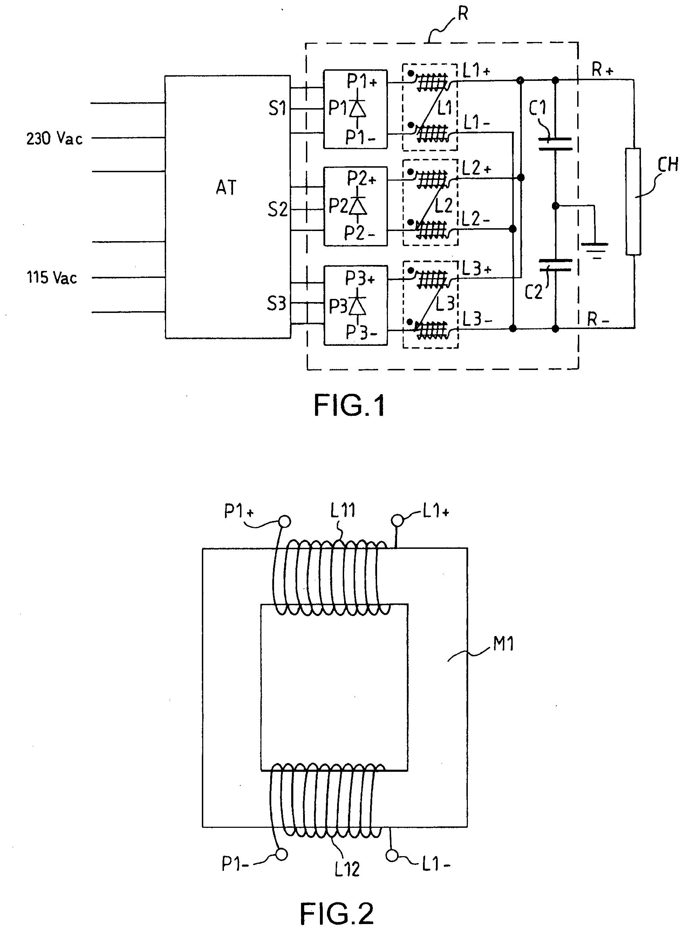

Le dispositif de redressement représenté sur la figure 1 comporte un autotransformateur AT alimenté en tension alternative triphasé 115V ou 230V. l'autotransformateur AT délivre trois systèmes triphasés S1, S2 et S3. Chaque système comprend trois phases déphasées de 120° l'une de l'autre. Le dispositif comporte en propres à chaque système, un pont de redressement, respectivement P1, P2 et P3, ainsi que des moyens de lissage, respectivement L1, L2 et L3. Les pont de redressement P1, P2 et P3 et les moyens de lissage L1, L2 et L3 forment des moyens de redressement R du dispositif.

Pour chaque système S1, S2 ou S3, les moyens de lissage L1, L2 ou L3 comportent une sortie positive, respectivement L1+, L2+ et L3+ et une sortie négative, respectivement L1-, L2- et L3-. Les sorties positives L1+, L2+ et L3+ de chacun des moyens de lissage sont raccordées entre elles pour former une sortie positive R+ des moyens de redressement. Les sorties négatives L1-, L2- et L3- de chacun des moyens de lissage sont raccordées entre elles pour former une sortie négative R- des moyens de redressement. Entre les sorties R+ et R- deux condensateurs C1 et C2 sont raccordés en série. Le point commun des deux condensateurs C1 et C2 est relié à une masse du dispositif. Les moyens de lissage L1, L2 et L3 associés aux condensateurs C1 et C2 permettent de limiter principalement la tension de mode commun, et également la tension de mode différentielle entre les deux sorties R+ et R-. Le dispositif est destiné à alimenter une charge Ch raccordée entre les sorties R+ et R-.

Avantageusement, les moyens de lissage L1, L2 et L3 comportent chacun deux bobinages couplés sur un seul circuit magnétique respectivement M1, M2 et M3. Il est bien entendu que les circuits magnétiques M1, M2 et M3 sont indépendants les uns des autres. Les bobinages portent les références L11 et L12 pour les moyens de lissage L1, L21 et L22 pour les moyens de lissage L2 et enfin L31 et L32 pour les moyens de lissage L3. Les deux bobinages L11 et L12 des moyens de lissage L1 sont représentés à titre d'exemple sur la figure 2. Les moyens de lissage L1, L2 et L3 sont indépendants les uns des autres et en particulier au niveau de leurs entrées. Ainsi au travers de chacun des moyens de lissage L1, L2 ou L3 ne transite que le courant propre à chaque pont de redressement P1, P2 ou P3. Le courant circulant dans chaque bobinage, par exemple L11 et L12 d'un même moyen de lissage est égal et on n'atteint pas la saturation. Cette disposition permet de réduire la masse des circuits magnétiques M1, M2 et M3. Sur chaque circuit magnétique, par exemple M1, le sens d'enroulement de chaque bobinage L11 et L12 est défini de façon à annuler les ampères-tours des deux bobines. Sur la figure 1, Le sens d'enroulement est symbolisé par des points représentés au voisinage de la première spire de chaque bobinage et par une forme en Z de chaque circuit magnétique. Autrement dit les deux bobinages de chaque moyen de lissage sont raccordés en mode commun. Les moyens de lissage ne filtrent principalement que la tension de mode commun. La valeur de self des moyens de lissage est réduite et le filtrage de la tension de mode différentielle est assuré par la self de fuite des moyens de lissage. La définition des moyens de lissage est réalisée de façon à obtenir une valeur de self de fuite suffisante.

Avantageusement, pour chaque système S1, S2 et S3, le pont de redressement associé, respectivement P1, P2 et P3 comporte une sortie positive respectivement P1+, P2+ et P3+, et une sortie négative respectivement P1-, P2-, P3-. Pour chaque pont de redressement, la sortie positive est raccordée à une entrée positive des moyens de lissage. De même, pour chaque pont de redressement, la sortie négative est raccordée à une entrée négative des moyens de lissage.

Avantageusement, l'entrée positive des moyens de lissage L1, L2, et L3 est formée par une première borne de la première bobine respectivement L11, L21, L31, et l'entrée négative des moyens de lissage est formée par une première borne de la seconde bobine respectivement L12, L22, L32. Une seconde borne de la première bobine forme la sortie positive respectivement L1+, L2+ et L3+ des moyens de lissage L1, L2 et L3 et une seconde borne de la seconde bobine forme la sortie négative respectivement L1-, L2- et L3- des moyens de lissage L1, L2 et L3.

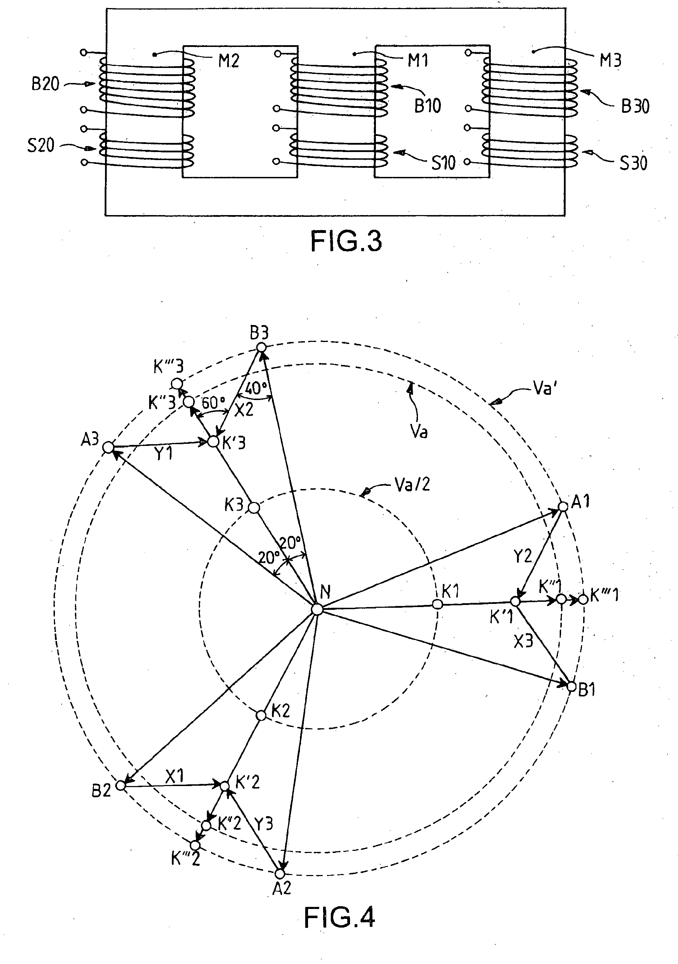

Sur la figure 3, on rappelle le principe classique d'un transformateur triphasé formé par des bobinages disposés autour des branches d'un triple circuit magnétique fermé. Le triple circuit magnétique fermé comporte un noyau ferromagnétique avec une branche centrale M1 pour recevoir les bobinages correspondant à une première phase, et deux branches latérales M2 et M3, reliées à la branche centrale de part et d'autre de cette dernière, pour recevoir les bobinages d'une deuxième et d'une troisième phase respectivement. La branche centrale M1 et l'une des branches latérales forment un premier circuit magnétique fermé ; la branche centrale et l'autre branche latérale forment un deuxième circuit magnétique fermé ; les deux branches latérales M2 et M3 forment un troisième circuit magnétique fermé.

Plusieurs bobinages sont enroulés sur chaque branche, certains formant primaires de transformateur et d'autres formant secondaires. Le montage est identique pour les trois branches, c'est-à-dire que les bobinages jouant le même rôle sur les différentes branches comportent le même nombre de spires et les mêmes sens d'enroulement.

A titre de schéma simplifié on a représenté sur la figure 1 un bobinage principal respectif B10, B20, B30 et un bobinage auxiliaire respectif S1, S2, S3 sur chaque branche du noyau magnétique. Les bobinages d'une même branche magnétique sont parcourus par le même flux magnétique. Pour plus de commodité de représentation, les bobinages auxiliaires sont représentés à côté des bobinages principaux, bien qu'en réalité les deux bobinages soient disposés au même endroit (l'un autour de l'autre, voire les couches de l'un intercalées entre les couches de l'autre) pour être traversés exactement par le même flux magnétique.

Dans le schéma de connexion le plus simple qu'on puisse imaginer, transformant une tension triphasée en une autre tension triphasée, les bobinages principaux pourraient être des enroulements primaires d'un transformateur et les bobinages auxiliaires seraient des enroulements secondaires. Les bobinages primaires pourraient être connectés en triangle ou en étoile, pour recevoir la tension triphasée à convertir. Les bobinages secondaires seraient aussi connectés soit en triangle soit en étoile pour produire une tension triphasée. Les flux magnétiques qui circulent dans les trois branches sont identiques mais déphasés de 120° les uns par rapport aux autres. Dans la réalisation d'un transformateur convertissant une tension triphasée en une tension à neuf phases, le montage est plus complexe et utilise un plus grand nombre de bobinages comme on va le voir, mais on conserve le principe d'un circuit magnétique à trois branches symétriques dans lequel les flux magnétiques des différentes branches sont déphasés de 120° les uns par rapport aux autres et dans lequel les bobinages d'une même branche sont tous parcourus par le même flux magnétique.

Aux bornes d'un bobinage secondaire d'une branche magnétique apparaît une tension en phase avec la tension aux bornes du bobinage primaire de la même branche. La tension engendrée dans le bobinage secondaire dépend

- de la valeur de tension aux bornes du primaire associé,
- du rapport entre les nombres de spires du primaire et du secondaire,
- et du sens de rotation du courant dans l'enroulement du bobinage secondaire par rapport au sens du courant dans le bobinage primaire (la phase de la tension est inversée si les sens sont inversés).

Pour un transformateur avec isolation entre potentiels du primaire et potentiels du secondaire, les bornes des bobinages secondaires ne sont pas reliées aux bornes des bobinages primaires ou à d'autres éléments de circuit du côté du primaire. Pour un autotransformateur (transformateur sans isolation), les bornes des bobinages secondaires peuvent être reliées aux bornes des bobinages primaires ou à des prises intermédiaires formées dans les bobinages primaires. L'invention concerne les autotransformateurs.

On va maintenant expliquer le principe de représentation vectorielle permettant de décrire le fonctionnement d'un transformateur plus complexe et notamment d'un autotransformateur capable de fournir neuf phases secondaires à partir des trois phases de l'alimentation primaire.

La phase et l'amplitude de la tension (tension simple présente en un point du circuit ou tension différentielle présente entre deux points du circuit) peuvent être représentées par un vecteur dont la longueur représente l'amplitude de la tension alternative (simple ou différentielle) et dont l'orientation représente la phase de 0° à 360° de cette tension alternative.

Pour la constitution d'un autotransformateur capable de produire neuf phases à partir de trois phases espacées de 120°, on cherche des compositions de vecteurs qui, à partir des trois phases de départ, permettent de fabriquer les neuf phases recherchées.

Les vecteurs utilisés dans cette composition sont obtenus d'une part à partir de points représentant les bornes de bobinages principaux ou auxiliaires et d'autre part à partir de points représentant des prises intermédiaires de ces bobinages. La tension obtenue entre deux prises intermédiaires d'un bobinage principal est en phase avec la tension du bobinage principal (les vecteurs sont donc colinéaires) ; son amplitude est une fraction de la tension aux bornes du bobinage principal, cette fraction étant fonction du rapport entre le nombre de spires d'enroulement situées entre les prises intermédiaires et le nombre de spires total du bobinage principal ; la longueur relative du vecteur représentant la tension entre deux prises intermédiaires d'un bobinage est déterminée par ce rapport de nombre de spires.

Selon le même principe, la tension obtenue aux bornes d'un bobinage auxiliaire associé au bobinage principal (c'est-à-dire parcouru par le même flux magnétique donc enroulé au même endroit sur une même branche magnétique) est en phase avec la tension aux bornes du bobinage principal (les vecteurs sont donc parallèles) et son amplitude est également déterminée par le rapport entre le nombre de spires du bobinage auxiliaire et le nombre de spires du bobinage principal ; la longueur du vecteur représentant la tension dans le bobinage auxiliaire est donc, relativement à la longueur du vecteur représentant la tension dans le bobinage principal, dans le rapport des nombres de spires.

Dans cette demande de brevet, on utilisera l'appellation "bobinage principal" pour désigner un bobinage ayant deux extrémités et des prises intermédiaires, cette appellation ne signifiant pas pour autant que le bobinage principal soit nécessairement un bobinage primaire de l'autotransformateur. En effet, dans certaines réalisations (transformateur abaisseur de tension) le bobinage principal sera effectivement un bobinage primaire au sens où il est directement alimenté par une tension à convertir ; mais dans d'autres réalisations (transformateur élévateur) le bobinage principal ne sera pas un bobinage primaire puisque l'alimentation triphasée à convertir ne sera pas appliquée entre les deux extrémités de ce bobinage.

La figure 4 représente une composition vectorielle qui permet d'aboutir à la présente invention, dans le cas d'un autotransformateur élévateur de tension. L'autotransformateur trois bobinages principaux B10, B20, B30 connectés en montage en étoile. Les trois bobinages principaux B10, B20, B30 ont une borne commune N formant le neutre de l'autotransformateur. L'alimentation triphasée de l'autotransformateur est appliquée à trois points d'entrée K"1, K"2, K"3 appartenant chacun à un des trois bobinages principaux, respectivement B10, B20, B30.

Par commodité, dans ce qui suit, les mêmes lettres (par exemple K"1, K"2 et K"3) désigneront à la fois les bornes d'un bobinage (sur les figures représentant des bobinages), et les extrémités du vecteur représentant la tension aux bornes de ce bobinage (sur les figures représentant les compositions vectorielles).

L'alimentation triphasée vient d'un réseau de distribution de puissance alternative à une fréquence qui dépend des applications. Dans l'aéronautique, où l'invention est particulièrement intéressante car les contraintes de poids, d'encombrement et de suppression d'harmoniques y sont fortes, la fréquence est souvent de 400 Hz et elle peut-être aussi de 800 Hz.

Pour la composition vectorielle, on choisit le point N comme origine. Les tensions simples d'entrée et de sortie de l'autotransformateur seront référencées par rapport à ce point. Ainsi, le vecteur NK"1 représente l'amplitude et la phase de la tension simple présente sur la borne K"1 de l'alimentation triphasée. Si on suppose que l'alimentation triphasée appliquée en K"1, K"2 et K"3, est bien équilibrée, le point neutre N représente le point de référence où la somme vectorielle des tensions NK"1, NK"2, NK"3 est nulle. Les vecteurs NK"2 et NK"3, de même amplitude que le vecteur NK"1, sont respectivement orientés à +120° et -120° du vecteur de référence NK"1. Pour simplifier la notation vectorielle, dans tout ce qui suit la première lettre d'un vecteur est considérée comme l'origine du vecteur et la deuxième lettre est l'aboutissement du vecteur ; ainsi, NK"1 représente le vecteur partant de N et allant jusqu'à K"1 et non l'inverse.

Sur la figure 4, on a choisi comme référence de phase, la phase de la tension simple NK"1 (direction horizontale). Les angles sont mesurés dans le sens horaire. La direction du vecteur NK"2 est à +120° et celle du vecteur NK"3 est à +240°.

Chacun des bobinages principaux B10, B20 et B30 comporte une première et une deuxième borne. Les premières bornes sont raccordées en N. Les deuxièmes bornes sont appelées respectivement K'''1, K'''2 et K'''3. Chaque bobinage principal B10, B20 et B30 comportent trois prises intermédiaires, K1, K'1 et K"1 pour le bobinage B10, K2, K'2 et K"2 pour le bobinage B20 ainsi que K3, K'3 et K"3 pour le bobinage B30. Dans le mode réalisation représenté sur la figure 4 (élévateur de tension), les trois tensions triphasées d'entrées sont appliquées aux prises K"1, K"2 et K"3. Les trois premières tensions de sortie sont en phase avec les tensions triphasées d'entrée et sont disponibles aux deuxièmes bornes K'''1, K'''2 et K'''3 des bobinages principaux B10, B20 et B30. Un coefficient k représente le rapport entre l'amplitude Va' de la tension des neuf phases de sortie et l'amplitude Va des trois tensions triphasées d'entrées

$$Va' = Va \times k$$

Les prises intermédiaires K1, K2 et K3 peuvent être utilisée pour appliquer des tensions triphasées d'entrées différentes de celles prévues sur les prises K"1, K"2 et K"3. Cette disposition présente par exemple un intérêt dans le secteur aéronautique.

Dans les avions de taille importante tels que les avions de transport de dizaines ou de centaines de passagers, l'alimentation électrique devient un élément très important dans la conception générale de l'appareil. En effet les appareils électriques placés à bord et servant soit au fonctionnement de l'appareil soit aux services à bord sont de plus en plus nombreux et consomment de plus en plus d'énergie.

Cette énergie est produite par des alternateurs couplés aux moteurs de l'avion et les alternateurs fournissent usuellement une tension triphasée de 115 volts efficaces entre neutre et phase, à fréquence de 400 Hz. Cette tension est transportée à l'intérieur de l'avion par des câbles électriques dont la section est proportionnelle au carré de la valeur du courant qui doit pouvoir être transporté par ces câbles. Typiquement, on peut avoir besoin de plusieurs centaines de mètres de câbles capables de transporter plusieurs kilowatts. Il en résulte un poids très important de cuivre ou d'aluminium à installer dans l'avion.

Il est apparu par conséquent qu'il pouvait être préférable de concevoir maintenant des avions dans lesquels l'énergie transportée circule sous 230 volts au moins, afin de diviser sensiblement par 4 la section des câbles transportant l'énergie. Les alternateurs de tels avions seront donc conçus pour fournir directement une alimentation triphasée de 400 Hz à 800Hz et 230 volts efficaces entre neutre et phase. De plus, ces avions modernes vont maintenant être équipés d'un réseau de distribution d'énergie électrique continue, typiquement à 540 volts (plus ou moins 270 volts par rapport à la structure métallique de l'avion). L'intérêt de la distribution d'énergie continue est de permettre, par l'intermédiaire d'onduleurs à fréquence variable, de réaliser une commande individuelle de vitesse de certains moteurs synchrones ou asynchrones présents dans l'appareil (compresseurs, climatiseurs, pompes à carburant etc.).

Par ailleurs, les avions doivent consommer de l'énergie électrique lorsqu'ils sont immobilisés au sol sur un aéroport, moteurs arrêtés. Cette énergie est nécessaire pour assurer des fonctions d'éclairage, climatisation, maintenance, démarrage, etc.

Ils sont donc connectés, par l'intermédiaire d'un connecteur triphasé accessible à l'extérieur de l'avion, à des groupés générateurs d'énergie électrique placés au sol, administrés par les' aéroports. Les groupes générateurs fournissent tous de l'énergie triphasée sous 115 volts efficaces puisque la plupart des avions sont équipés pour fonctionner avec 115 volts efficaces. On peut imaginer que dans le futur les aéroports s'équipent avec des groupes fournissant du 115 volts et du 230 volts, ou que des groupes spéciaux fournissant 230 volts soient prévus pour le cas où un avion équipé en 230 volts se poserait. Mais cela implique un coût que les aéroports ne souhaitent pas assumer et cette solution n'est envisageable qu'à très long terme lorsque le nombre d'avions équipés en 230 volts sera très significatif.

Dans l'immédiat, la solution est de prévoir sur l'avion un transformateur triphasé placé entre un connecteur d'alimentation extérieure (destiné à être relié au générateur au sol) et le réseau de fourniture d'énergie à 230 volts de l'avion. Ce transformateur ajoute un poids et un encombrement supplémentaire uniquement pour cette raison de logistique des aéroports.

Pour pallier ce problème, un autotransformateur conforme à l'invention peut être alimenté soit en 115V par les prises K1, K2 et K3 soit en 230V par les prises K"1, K"2 et K"3.

Les six autres tensions de sortie sont réparties par paires symétriquement déphasées de 20° par rapport aux trois premières tensions de sorties. Afin de les produire, l'autotransformateur comporte sur chaque branche magnétique M1, M2 et M3 deux bobinages auxiliaires X1 et Y1 pour la branche M1, X2 et Y2 pour la branche M2 ainsi que X3 et Y3 pour la branche M3. La première tension de sortie A1 est déphasée de -20° par rapport à la tension K'''1 et est obtenue de la façon suivante : Une première borne du bobinage auxiliaire Y2 est raccordé à la prise K'1 et la deuxième borne du bobinage auxiliaire Y2 forme le point A1. De même, la deuxième tension de sortie B1 est déphasée de +20° par rapport à la tension K'''1 et est obtenue en raccordant une première borne du bobinage auxiliaire X3 à la prise K'1. La deuxième borne du bobinage auxiliaire Y2 forme le point B1.

On pratique de façon semblable pour obtenir les dernières tensions de sortie. Les tensions A2 et B2 sont déphasées respectivement de -20° et +20° par rapport à la tension K'''2 et les tensions A3 et B3 sont déphasées respectivement de -20° et +20° par rapport à la tension K'''3. La tension A2 est obtenue en raccordant une première borne du bobinage auxiliaire Y3 à la prise K'2. La deuxième borne du bobinage auxiliaire Y3 forme le point A2. La tension B2 est obtenue en raccordant une première borne du bobinage auxiliaire X1 à la prise K'2.

La deuxième borne du bobinage auxiliaire X1 forme le point B2. La tension A3 est obtenue en raccordant une première borne du bobinage auxiliaire Y1 à la prise K'3. La deuxième borne du bobinage auxiliaire Y3 forme le point A3. La tension B3 est obtenue en raccordant une première borne du bobinage auxiliaire X2 à la prise K'3. La deuxième borne du bobinage auxiliaire X2 forme le point B3.

Les points K'''1, K'''2 est K'''3 forment le premier système de sortie triphasé. Les points A1, A2 et A3 forment le deuxième système de sortie triphasé. Les points B1, B2 et B3 forment le troisième système de sortie triphasé.

Les longueurs des vecteurs représentés sur la figure 2 permettent de définir les nombres de spires des différents bobinages. Tout d'abord pour le bobinage principal B10, le rapport k entre les amplitudes des tensions d'entée Va et de sortie. Va' permet de définir le rapport entre le nombre N total de spires de l'enroulement B10 et le nombre de spires n"1 entre les points N et K"1 :

$$N = n''1 \times k$$

Le nombre de spires n1 entre les points N et K1 est défini de la même façon. Par exemple, si l'autotransformateur est alimenté soit en 230V par les prises K"1, K"2 et K"3 soit en 115V par les prises K1, K2 et K3 on aura :

$$N = n1 \times 2k$$

Les nombres de spires n'1 entre la borne N et la prise K'1 ainsi que le nombre de spires des bobinages auxiliaires peut être défini par construction géométrique sur le figure 2 ou encore par calcul trigonométrique.

Afin d'assurer la symétrie de l'autotransformateur, les nombres de spires des autres bobinages principaux B20 et B30 sont définis de la même façon en changeant les repères 1 par 2 ou 3 aux déterminations qui précèdent. Pour la même raison, les bobinages auxiliaires ont tous le même nombre de spires. La symétrie de l'autotransformateur permet d'en assurer la réversibilité et permet de ne pas introduire de déphasage entre le courant et la tension sur l'alimentation.

Le sens d'enroulement des différents bobinages sur leur noyau magnétique respectif est donné par l'orientation des vecteurs représentés sur la figure 4 au voisinage de la première spire de chaque bobinage. Pour mémoire, pour bobinages principaux, les points indiquant les premières spires ont été représentés pour chaque prise intermédiaire.

## Revendications

1. Dispositif de redressement d'une tension alternative triphasée comportant un autotransformateur (AT) alimenté en tension triphasé et délivrant plusieurs systèmes (S1, S2, S3) triphasés, chaque système comprenant trois phases déphasées de 120° l'une de l'autre, des moyens de redressement (R) des systèmes triphasés (S1, S2, S3), **caractérisé en ce que** les moyens de redressement (R) comportent, propres à chaque système, un pont de redressement (P1, P2, P3) et des moyens de lissage (L1, L2, L3) et **en ce que** les moyens de lissage (L1, L2, L3) associés à chaque système (S1, S2, S3) sont indépendants les uns des autres.

2. Dispositif selon la revendication 1, **caractérisé en ce que**, pour chaque système (S1, S2, S3), les moyens de lissage (L1, L2, L3) comportent une sortie positive (L1+, L2+, L3+) et une sortie négative (L1-, L2-, L3-), **en ce que** les sorties positives (L1+, L2+, L3+) de chacun des moyens de lissage (L1, L2, L3) sont raccordées entre elles pour former une sortie positive (R+) des moyens de redressement (R) et **en ce que** les sorties négatives (L1-, L2-, L3-) de chacun des moyens de lissage (L1, L2, L3) sont raccordées entre elles pour former une sortie négative (R-) des moyens de redressement (R).

3. Dispositif selon l'une des revendications précédentes, **caractérisé en ce que** les moyens de lissage (L1, L2, L3) de chaque système comportent deux bobinages (L11, L12 ; L21, L22 ; L31, L32) couplés sur un seul circuit magnétique (M1, M2, M3).

4. Dispositif selon la revendication 3, **caractérisé en ce que** les circuits magnétiques (M1, M2, M3) de chacun des moyens de lissage sont indépendants les uns des autres.

5. Dispositif selon l'une quelconque des revendications 3 ou 4, **caractérisé en ce que** les deux bobinages (L11, L12 ; L21, L22 ; L31, L32) de chaque moyen de lissage (L1, L2, L3) sont raccordées en mode commun.

6. Dispositif selon l'une quelconque des revendications 2 à 6, **caractérisé en ce que**, pour chaque système, le pont de redressement (P1, P2, P3) comporte une sortie positive (P1+, P2+, P3+), et une sortie négative (P1-, P2-, P3-), **en ce que** la sortie positive (P1+, P2+, P3+) du pont de redressement (P1, P2, P3) est raccordée à une entrée positive des moyens de lissage (L1, L2, L3) et **en ce que** la sortie négative (P1-, P2-, P3-) du pont de redressement (P1, P2, P3) est raccordée à une entrée négative des moyens de lissage (L1, L2, L3).

7. Dispositif selon l'une quelconque des revendications 3 ou 4 prise en combinaison avec la revendication 6, **caractérisé en ce que** l'entrée positive des moyens de lissage (L1, L2, L3) est formée par une première borne de la première bobine (L11, L21, L31), **en ce que** l'entrée négative des moyens de lissage est formée par une première borne de la seconde bobine (L12, L22, L32), **en ce qu'**une seconde borne de la première bobine (L11, L21, L31) forme la sortie positive (L1+, L2+, L3+) des moyens de lissage (L1, L2, L3) et **en ce qu'**une seconde borne de la seconde bobine forme la sortie négative (L1-, L2-, L3-) des moyens de lissage (L1, L2, L3).

## Patentansprüche

1. Vorrichtung zur Gleichrichtung einer Dreiphasenwechselspannung, umfassend einen Spartransformator (AT), der mit Dreiphasenspannung versorgt wird und mehrere dreiphasige Systeme (S1, S2, S3) versorgt, jedes System umfassend drei untereinander um 120° versetzte Phasen, Gleichrichtungsmittel (R) der dreiphasigen Systeme (S1, S2, S3), **dadurch gekennzeichnet, dass** die Gleichrichtungsmittel (R) für jedes System eine Gleichrichterbrücke (P1, P2, P3) und Glättungsmittel (L1, L2, L3) umfassen, und dass die Glättungsmittel (L1, L2, L3) die mit jedem System (S1, S2, S3) assoziiert sind, unabhängig voneinander sind.

2. Vorrichtung nach Anspruch 1, **dadurch gekennzeichnet, dass** die Glättungsmittel (L1, L2, L3) für jedes System (S1, S2, S3) einen Plusausgang (L1+, L2+, L3+) und einen Minusausgang (L1-, L2-, L3-) umfassen, und dadurch, dass die Plusausgänge (L1+, L2+, L3+) von jedem der Glättungsmittel (L1, L2, L3) untereinander verbunden sind, um einen Plusausgang (R+) der Gleichrichtungsmittel (R) zu bilden, und dass die Minusausgänge (L1-, L2-, L3-) von jedem der Glättungsmittel (L1, L2, L3) miteinander verbunden sind, um einen Minusausgang (R-) der Gleichrichtungsmittel (R) zu bilden.

3. Vorrichtung nach einem der vorherigen Ansprüche, **dadurch gekennzeichnet, dass** die Glättungsmittel (L1, L2, L3) von jedem System zwei Wicklungen (L11, L12; L21, L22; L31, L32) umfassen, die auf einem einzelnen Magnetkreis (M1, M2, M3) gekoppelt sind.

4. Vorrichtung nach Anspruch 3, **dadurch gekennzeichnet, dass** die Magnetkreise (M1, M2, M3) von jedem der Glättungsmittel unabhängig voneinander sind.

5. Vorrichtung nach einem der Ansprüche 3 oder 4, **dadurch gekennzeichnet, dass** die zwei Wicklungen (L11, L12; L21, L22; L31, L32) von jedem Glättungsmittel (L1, L2, L3) in Gleichtakt verbunden sind.

6. Vorrichtung nach einem der Ansprüche 2 bis 6, **dadurch gekennzeichnet, dass** die Gleichrichterbrücke (P1, P2, P3) für jedes System einen Plusausgang (P1+, P2+, P3+) und einen Minusausgang (P1-, P2-, P3-) umfasst, dass der Plusausgang (P1+, P2+, P3+) der Gleichrichterbrücke (P1, P2, P3) mit einem Pluseingang der Glättungsmittel (L1, L2, L3) verbunden ist, und dass der Minusausgang (P1-, P2-, P3-) der Gleichrichterbrücke (P1, P2, P3) mit einem Minuseingang der Glättungsmittel (L1, L2, L3) verbunden ist.

7. Vorrichtung nach einem der Ansprüche 3 oder 4, genommen in Kombination mit dem Anspruch 6, **dadurch gekennzeichnet, dass** der Pluseingang der Glättungsmittel (L1, L2, L3) durch eine erste Anschlussklemme der ersten Spule (L11, L21, L31) gebildet ist, dass der Minuseingang der Glättungsmittel durch eine erste Anschlussklemme der zweiten Spule (L12, L22, L32) gebildet ist, dass eine zweite Anschlussklemme der ersten Spule (L11, L21, L31) den Plusausgang (L1+, L2+, L3+) der Glättungsmittel (L1, L2, L3) bildet, und dass eine zweite Anschlussklemme der zweiten Spule den Minusausgang (L1-, L2-, L3-) der Glättungsmittel (L1, L2, L3) bildet.

**Claims**

1. A device for rectifying a three-phase alternating voltage comprising an auto-transformer (AT) fed with three-phase voltage and feeding a plurality of three-phase systems (S1, S2, S3), each system comprising three phases phase-shifted by 120° one relative to the other, means (R) for rectifying the three-phase systems (S1, S2, S3), **characterised in that** the rectifying means (R) comprise, specific to each system, a rectifier bridge (P1, P2, P3) and smoothing means (L1, L2, L3), and **in that** the smoothing means (L1, L2, L3) that are associated with each system (S1, S2, S3) are independent of each other.

2. The device according to claim 1, **characterised in that**, for each system (S1, S2, S3), the smoothing means (L1, L2, L3) comprise a positive output (L1+, L2+, L3+) and a negative output (L1-, L2-, L3-), **in that** the positive outputs (L1+, L2+, L3+) of each of the smoothing means (L1, L2, L3) are connected together so as to form a positive output (R+) of the rectifying means (R), and **in that** the negative outputs (L1-, L2-, L3-) of each of the smoothing means (L1, L2, L3) are connected together so as to form a negative output (R-) of the rectifying means (R).

3. The device according to any one of the preceding claims, **characterised in that** the smoothing means (L1, L2, L3) of each system comprise two windings (L11, L12; L21, L22; L31, L32) coupled on a single magnetic circuit (M1, M2, M3).

4. The device according to claim 3, **characterised in that** the magnetic circuits (M1, M2, M3) of each of the smoothing means are independent of each other.

5. The device according to any one of claims 3 to 4, **characterised in that** the two windings (L11, L12; L21, L22; L31, L32) of each smoothing means (L1, L2, L3) are connected in common mode.

6. The device according to any one of claims 2 to 6, **characterised in that**, for each system, the rectifier bridge (P1, P2, P3) comprises a positive output (P1+, P2+, P3+) and a negative output (P1-, P2-, P3-), **in that** the positive output (P1+, P2+, P3+) of the rectifier bridge (P1, P2, P3) is connected to a positive input of the smoothing means (L1, L2, L3), and **in that** the negative output (P1-, P2-, P3-) of the rectifier bridge (P1, P2, P3) is connected to a negative input of the smoothing means (L1, L2, L3).

7. The device according to any one of claims 3 or 4 taken in combination with claim 6, **characterised in that** the positive input of the smoothing means (L1, L2, L3) is formed by a first terminal of the first winding (L11, L21, L31), **in that** the negative input of the smoothing means is formed by a first terminal of the second winding (L12, L22, L32), **in that** a second terminal of the first winding (L11, L21, L31) forms the positive output (L1+, L2+, L3+) of the smoothing means (L1, L2, L3), and **in that** a second terminal of the second winding forms the negative output (L1-, L2-, L3-) of the smoothing means (L1, L2, L3).

FIG.1

FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5124904 A